# FASCICULE DE BREVET EUROPEEN

(11) **EP 3 565 917 B1**
(45) Date de publication et mention de la délivrance du brevet: **16.08.2023**
(21) Numéro de dépôt: 17832304.4
(22) Date de dépôt: 27.12.2017
(51) Int. Cl.: C25B 15/021, C25B 9/67, H01M 8/04007, F24H 1/16, F28D 7/04, H01M 8/2425, C25B 9/73, F28D 21/00, H01M 8/12

(54) **SYSTÈME DE SURCHAUFFE DES GAZ EN ENTRÉE D'UN EMPILEMENT À OXYDES SOLIDES DE TYPE SOEC/SOFC**
VERFAHREN ZUM ÜBERHITZEN VON GASEN AM EINGANG EINES SOEC/SOFC-FESTOXIDSTAPELS
METHOD FOR OVERHEATING GASES AT THE INLET OF A SOEC/SOFC-TYPE SOLID OXIDE STACK

(30) Priorité: 05.01.2017 FR 1750099
(43) Date de publication de la demande: 13.11.2019
(73) Titulaire: Commissariat à l'énergie atomique et aux énergies alternatives, 75015 Paris (FR)
(72) Inventeur: PLANQUE, Michel, 38180 Seyssins (FR); BERNARD, Charlotte, 74130 Contamine sur Arve (FR); REYTIER, Magali, 38250 Villard de Lans (FR); ROUX, Guilhem, 38120 Saint-Egreve (FR); SZYNAL, Philippe, 73800 Chignin (FR)
(74) Mandataire: Brevalex
(86) Numéro de dépôt international: PCT/FR2017/053850
(87) Numéro de publication internationale: WO 2018/127649

(56) Documents cités:
- WO-A1-2014/112378
- CN-A- 102 404 973
- US-A- 1 654 551
- US-A1- 2003 134 174
- US-A1- 2010 258 449

## Description

### DOMAINE TECHNIQUE

La présente invention se rapporte au domaine général de l'électrolyse de l'eau à haute température (EHT), en particulier l'électrolyse de la vapeur d'eau à haute température (EVHT), respectivement désignées par les appellations anglaises « High Temperature Electrolysis » (HTE) et « High Temperature Steam Electrolysis » (HTSE), de l'électrolyse du dioxyde de carbone (CO₂), voire encore de la co-électrolyse de l'eau à haute température (EHT) avec le dioxyde de carbone (CO₂).

Plus précisément, l'invention se rapporte au domaine des électrolyseurs à oxydes solides à haute température, désignés habituellement par l'acronyme SOEC (pour « Solide Oxide Electrolyzer Cell » en anglais).

Elle concerne également le domaine des piles à combustible à oxydes solides à haute température, désignées habituellement par l'acronyme SOFC (pour « Solid Oxide Fuel Cells » en anglais).

Ainsi, de façon plus générale, l'invention se réfère au domaine des empilements à oxydes solides de type SOEC/SOFC fonctionnant à haute température.

Plus précisément, l'invention concerne un empilement à oxydes solides de type SOEC/SOFC comportant un ensemble comportant un système de surchauffe des gaz en entrée de l'empilement et au moins un corps chauffant à son contact, ainsi qu'un procédé de fabrication d'un tel système de surchauffe des gaz.

### ÉTAT DE LA TECHNIQUE ANTÉRIEURE

Dans le cadre d'un électrolyseur à oxydes solides à haute température de type SOEC, il s'agit de transformer par le biais d'un courant électrique, au sein d'un même dispositif électrochimique, la vapeur d'eau (H₂O) en dihydrogène (H₂) et en dioxygène (O₂), et/ou encore de transformer le dioxyde de carbone (CO₂) en monoxyde de carbone (CO) et en dioxygène (O₂). Dans le cadre d'une pile à combustible à oxydes solides à haute température de type SOFC, le fonctionnement est inverse pour produire un courant électrique et de la chaleur en étant alimentée en dihydrogène (H₂) et en dioxygène (Oz), typiquement en air et en gaz naturel, à savoir par du méthane (CH₄). Par souci de simplicité, la description suivante privilégie le fonctionnement d'un électrolyseur à oxydes solides à haute température de type SOEC réalisant l'électrolyse de l'eau. Toutefois, ce fonctionnement est applicable à l'électrolyse du dioxyde de carbone (CO₂), voire encore de la co-électrolyse de l'eau à haute température (EHT) avec le dioxyde de carbone (CO₂). De plus, ce fonctionnement est transposable au cas d'une pile à combustible à oxydes solides à haute température de type SOFC.

Pour réaliser l'électrolyse de l'eau, il est avantageux de la réaliser à haute température, typiquement entre 600 et 1000°C, parce qu'il est plus avantageux d'électrolyser de la vapeur d'eau que de l'eau liquide et parce qu'une partie de l'énergie nécessaire à la réaction peut être apportée par de la chaleur, moins chère que l'électricité.

Pour mettre en oeuvre l'électrolyse de l'eau à haute température (EHT), un électrolyseur à oxydes solides à haute température de type SOEC est constitué d'un empilement de motifs élémentaires comportant chacun une cellule d'électrolyse à oxyde solide, ou encore cellule électrochimique, constituée de trois couches anode/électrolyte/cathode superposées l'une sur l'autre, et de plaques d'interconnexion en alliages métalliques, aussi appelées plaques bipolaires ou interconnecteurs. Chaque cellule électrochimique est enserrée entre deux plaques d'interconnexion. Un électrolyseur à oxydes solides à haute température de type SOEC est alors un empilement alterné de cellules électrochimiques et d'interconnecteurs. Une pile à combustible à oxydes solides à haute température de type SOFC est constituée du même type d'empilement de motifs élémentaires. Cette technologie à haute température étant réversible, le même empilement peut fonctionner en mode électrolyse et produire de l'hydrogène et de l'oxygène à partir d'eau et d'électricité, ou en mode pile à combustible et produire de l'électricité à partir d'hydrogène et d'oxygène.

Chaque cellule électrochimique correspond à un assemblage électrolyte/électrodes, qui est typiquement un assemblage multicouche en céramique dont l'électrolyte est formé par une couche centrale conductrice d'ions, cette couche étant solide, dense et étanche, et enserrée entre les deux couches poreuses formant les électrodes. Il est à noter que des couches supplémentaires peuvent exister, mais qui ne servent qu'à améliorer l'une ou plusieurs des couches déjà décrites.

Les dispositifs d'interconnexion, électrique et fluidique, sont des conducteurs électroniques qui assurent, d'un point de vue électrique, la connexion de chaque cellule électrochimique de motif élémentaire dans l'empilement de motifs élémentaires, garantissant le contact électrique entre une face et la cathode d'une cellule et entre l'autre face et l'anode de la cellule suivante, et d'un point de vue fluidique, combinant ainsi la production de chacune des cellules. Les interconnecteurs assurent ainsi les fonctions d'amenée et de collecte de courant électrique et délimitent des compartiments de circulation des gaz, pour la distribution et/ou la collecte.

Plus précisément, les interconnecteurs ont pour fonction principale d'assurer le passage du courant électrique mais aussi la circulation des gaz au voisinage de chaque cellule (à savoir : vapeur d'eau injectée, hydrogène et oxygène extraits pour l'électrolyse EHT ; air et combustible dont l'hydrogène injecté et eau extraite pour une pile SOFC), et de séparer les compartiments anodiques et cathodiques de deux cellules adjacentes, qui sont les compartiments de circulation des gaz du côté respectivement des anodes et des cathodes des cellules.

En particulier, pour un électrolyseur à oxydes solides à haute température de type SOEC, le compartiment cathodique comporte la vapeur d'eau et l'hydrogène, produit de la réaction électrochimique, tandis que le compartiment anodique comporte un gaz drainant, si présent, et de l'oxygène, autre produit de la réaction électrochimique. Pour une pile à combustible à oxydes solides à haute température de type SOFC, le compartiment anodique comporte le carburant, tandis que le compartiment cathodique comporte le comburant.

Pour réaliser l'électrolyse de la vapeur d'eau à haute température (EHT), on injecte de la vapeur d'eau (H₂O) dans le compartiment cathodique. Sous l'effet du courant électrique appliqué à la cellule, la dissociation des molécules d'eau sous forme de vapeur est réalisée à l'interface entre l'électrode à hydrogène (cathode) et l'électrolyte : cette dissociation produit du gaz dihydrogène (H₂) et des ions oxygène (O²⁻). Le dihydrogène (H₂) est collecté et évacué en sortie de compartiment à hydrogène. Les ions oxygène (O²⁻) migrent à travers l'électrolyte et se recombinent en dioxygène (O₂) à l'interface entre l'électrolyte et l'électrode à oxygène (anode). Un gaz drainant, tel que de l'air, peut circuler au niveau de l'anode et ainsi collecter l'oxygène généré sous forme gazeuse à l'anode.

Pour assurer le fonctionnement d'une pile à combustible à oxydes solides (SOFC), on injecte de l'air (oxygène) dans le compartiment cathodique de la pile et de l'hydrogène dans le compartiment anodique. L'oxygène de l'air va se dissocier en ions O²⁻. Ces ions vont migrer dans l'électrolyte de la cathode vers l'anode pour oxyder l'hydrogène et former de l'eau avec une production simultanée d'électricité. En pile SOFC, tout comme en électrolyse SOEC, la vapeur d'eau se trouve dans le compartiment de dihydrogène (H₂). Seule la polarité est inversée.

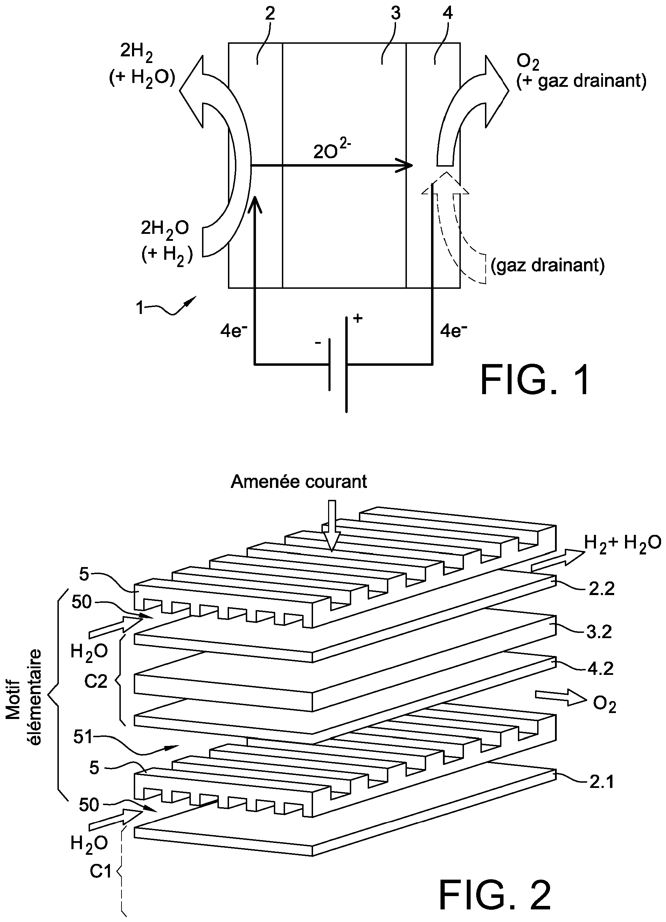

A titre d'illustration, la figure 1 représente une vue schématique montrant le principe de fonctionnement d'un électrolyseur à oxydes solides à haute température de type SOEC. La fonction d'un tel électrolyseur est de transformer la vapeur d'eau en hydrogène et en oxygène selon la réaction électrochimique suivante :

2 H₂O → 2 H₂ + O₂.

Cette réaction est réalisée par voie électrochimique dans les cellules de l'électrolyseur. Comme schématisée sur la figure 1, chaque cellule d'électrolyse élémentaire 1 est formée d'une cathode 2 et d'une anode 4, placées de part et d'autre d'un électrolyte solide 3. Les deux électrodes (cathode et anode) 2 et 4 sont des conducteurs électroniques et/ou ioniques, en matériau poreux, et l'électrolyte 3 est étanche au gaz, isolant électronique et conducteur ionique. L'électrolyte 3 peut être en particulier un conducteur anionique, plus précisément un conducteur anionique des ions O²⁻ et l'électrolyseur est alors dénommé électrolyseur anionique, par opposition aux électrolytes protoniques (H⁺).

Les réactions électrochimiques se font à l'interface entre chacun des conducteurs électroniques et le conducteur ionique.

A la cathode 2, la demi-réaction est la suivante :

2 H₂O + 4 e⁻ → 2 H₂ + 2 O²⁻.

A l'anode 4, la demi-réaction est la suivante:

2 O²⁻ → O₂ + 4 e⁻.

L'électrolyte 3, intercalé entre les deux électrodes 2 et 4, est le lieu de migration des ions O²⁻ sous l'effet du champ électrique créé par la différence de potentiel imposée entre l'anode 4 et la cathode 2.

Comme illustré entre parenthèses sur la figure 1, la vapeur d'eau en entrée de cathode peut être accompagnée d'hydrogène H₂ et l'hydrogène produit et récupéré en sortie peut être accompagné de vapeur d'eau. De même, comme illustré en pointillés, un gaz drainant, tel que l'air, peut en outre être injecté en entrée pour évacuer l'oxygène produit. L'injection d'un gaz drainant a pour fonction supplémentaire de jouer le rôle de régulateur thermique.

Un électrolyseur, ou réacteur d'électrolyse, élémentaire est constitué d'une cellule élémentaire telle que décrite ci-dessus, avec une cathode 2, un électrolyte 3, et une anode 4, et de deux interconnecteurs qui assurent les fonctions de distribution électrique, hydraulique et thermique.

Pour augmenter les débits d'hydrogène et d'oxygène produits, il est connu d'empiler plusieurs cellules d'électrolyse élémentaires les unes sur les autres en les séparant par des interconnecteurs. L'ensemble est positionné entre deux plaques d'interconnexion d'extrémité qui supportent les alimentations électriques et des alimentations en gaz de l'électrolyseur (réacteur d'électrolyse).

Un électrolyseur à oxydes solides à haute température de type SOEC comprend ainsi au moins une, généralement une pluralité de cellules d'électrolyse empilées les unes sur les autres, chaque cellule élémentaire étant formée d'un électrolyte, d'une cathode et d'une anode, l'électrolyte étant intercalé entre l'anode et la cathode.

Comme indiqué précédemment, les dispositifs d'interconnexion fluidique et électrique qui sont en contact électrique avec une ou des électrodes assurent en général les fonctions d'amenée et de collecte de courant électrique et délimitent un ou des compartiments de circulation des gaz.

Ainsi, le compartiment dit cathodique a pour fonction la distribution du courant électrique et de la vapeur d'eau ainsi que la récupération de l'hydrogène à la cathode en contact.

Le compartiment dit anodique a pour fonction la distribution du courant électrique ainsi que la récupération de l'oxygène produit à l'anode en contact, éventuellement à l'aide d'un gaz drainant.

La figure 2 représente une vue éclatée de motifs élémentaires d'un électrolyseur à oxydes solides à haute température de type SOEC selon l'art antérieur. Cet électrolyseur comporte une pluralité de cellules d'électrolyse élémentaires C1, C2, de type à oxydes solides (SOEC), empilées alternativement avec des interconnecteurs 5. Chaque cellule C1, C2 est constituée d'une cathode 2.1, 2.2 et d'une anode (seule l'anode 4.2 de la cellule C2 est représentée), entre lesquelles est disposé un électrolyte (seul l'électrolyte 3.2 de la cellule C2 est représenté).

L'interconnecteur 5 est un composant en alliage métallique qui assure la séparation entre les compartiments cathodique 50 et anodique 51, définis par les volumes compris entre l'interconnecteur 5 et la cathode adjacente 2.1 et entre l'interconnecteur 5 et l'anode adjacente 4.2 respectivement. Il assure également la distribution des gaz aux cellules. L'injection de vapeur d'eau dans chaque motif élémentaire se fait dans le compartiment cathodique 50. La collecte de l'hydrogène produit et de la vapeur d'eau résiduelle à la cathode 2.1, 2.2 est effectuée dans le compartiment cathodique 50 en aval de la cellule C1, C2 après dissociation de la vapeur d'eau par celle-ci. La collecte de l'oxygène produit à l'anode 4.2 est effectuée dans le compartiment anodique 51 en aval de la cellule C1, C2 après dissociation de la vapeur d'eau par celle-ci. L'interconnecteur 5 assure le passage du courant entre les cellules C1 et C2 par contact direct avec les électrodes adjacentes, c'est-à-dire entre l'anode 4.2 et la cathode 2.1.

Les conditions de fonctionnement d'un électrolyseur à oxydes solides à haute température (SOEC) étant très proches de celles d'une pile à combustible à oxydes solides (SOFC), les mêmes contraintes technologiques se retrouvent.

Ainsi, le bon fonctionnement de tels empilements à oxydes solides de type SOEC/SOFC fonctionnant à haute température requiert principalement de satisfaire aux points énoncés ci-après.

Tout d'abord, il est nécessaire d'avoir une isolation électrique entre deux interconnecteurs successifs sous peine de court-circuiter la cellule électrochimique, mais aussi un bon contact électrique et une surface de contact suffisante entre une cellule et un interconnecteur. La plus faible résistance ohmique possible est recherchée entre cellules et interconnecteurs.

Par ailleurs, il faut disposer d'une étanchéité entre les compartiments anodiques et cathodiques sous peine d'avoir une recombinaison des gaz produits entraînant une baisse de rendement et surtout l'apparition de points chauds endommageant l'empilement.

Enfin, il est indispensable d'avoir une bonne distribution des gaz à la fois en entrée et en récupération des produits sous peine de perte de rendement, d'inhomogénéité de pression et de température au sein des différents motifs élémentaires, voire de dégradations rédhibitoires des cellules électrochimiques.

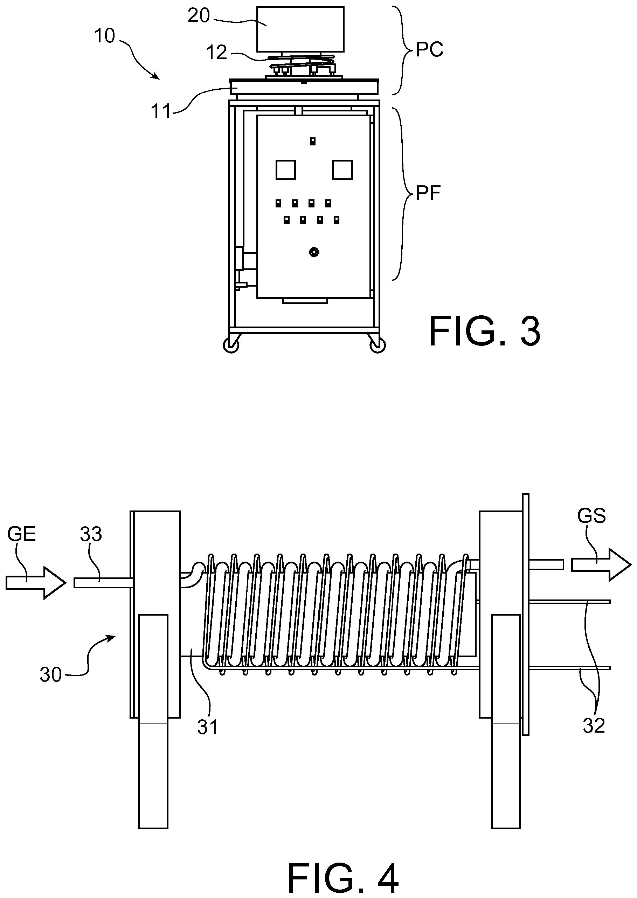

Les gaz entrants et sortants dans un empilement d'électrolyse à haute température (SOEC) ou de pile à combustible (SOFC) fonctionnant à haute température peuvent être gérés par le biais de dispositifs appropriés d'un four tel que celui illustré en référence à la figure 3.

Le four 10 comporte ainsi des parties froides PF et des parties chaudes PC, ces dernières comprenant la sole de four 11, un tube en boucle 12 pour gérer les entrées et sorties de gaz et l'empilement 20, encore appelé « stack », d'électrolyse à haute température (SOEC) ou de pile à combustible (SOFC).

De façon classique, il existe deux techniques principales pour réaliser la surchauffe des gaz d'entrée dans un empilement d'électrolyse à haute température (SOEC) ou de pile à combustible (SOFC).

Tout d'abord, comme représenté schématiquement par le tube en boucle 12 sur la figure 3, il est possible d'utiliser des longueurs de tube enroulées au droit des résistances chauffantes d'un four 10 dans la partie chaude PC. Les gaz auront été préalablement portés à une température d'environ 500°C en sortie d'échangeurs si cela est prévu par le système. Alors, ce ou ces tubes de surchauffe 12 des gaz permettent de gagner environ 300°C de plus en utilisant le rayonnement thermique des résistances du four 10 et du stack 20, avant d'être introduits dans le stack 20.

Par ailleurs, il est également connu de faire passer les gaz par des chauffeurs électriques 30 tels que celui représenté sur la figure 4. Un tel chauffeur électrique 30 s'apparente à un ensemble massif comprenant une masse inertielle 31 en acier, une résistance chauffante 32 et un tube de conduite des gaz 33 enroulé sur la masse inertielle 31. Sur la figure 4 sont également représentés les gaz entrants GE et les gaz sortants GS. Ces chauffeurs électriques 30 sont chargés de porter les gaz entrants GE de 20°C à une température d'environ 800°C avant l'introduction des gaz sortants GS dans le stack 20.

Le bon fonctionnement de ces deux techniques principales énoncées précédemment nécessite une température très précise en entrée de l'empilement ou stack 20 afin de garantir le bon fonctionnement de l'ensemble. La première technique est ainsi habituellement privilégiée.

En règle générale, pour obtenir la bonne température en entrée de stack 20, et pour un diamètre intérieur de tube 12 d'environ 10 mm, il faut une longueur développée d'environ 3 m par lignes de gaz en entrée, typiquement H₂O et N₂O₂, avec un débit compris entre 5 et 15 Nm³/s. Cette longueur d'environ 3 m, qui permet de gagner environ 300°C, fonctionne aussi bien en mode d'empilement d'électrolyse à haute température (SOEC) ou de pile à combustible (SOFC), et garantit la bonne température en entrée de stack.

Toutefois, cette première technique qui, après passage des gaz dans les échangeurs, récupère le rayonnement des résistances du four pour monter les gaz à la bonne température en entrée de stack oblige donc à faire des enroulements d'une longueur d'environ 3 m, ce qui entraîne l'inconvénient de rajouter de la complexité dans les cintrages pour faire en sorte que les tubes arrivent aux bons endroits dans un espace confiné, et ce qui augmente de façon importante la taille du four. La mise en oeuvre est donc compliquée car il faut être précis et car les tubes, typiquement de diamètre 10/12 en inox 316L ou Inconel 600, sont très rigides. Par ailleurs, le fait de faire des boucles de surchauffe de gaz prend beaucoup de place, et interfère immanquablement avec les amenées de courant, les passages de thermocouples, et les tubes de sortie de l'électrolyseur, ce qui amène souvent à raccourcir ces lignes du fait du manque de place dans le four. De plus, il faut refaire le même travail de cintrage à chaque nouveau stack, car le démontage du raccordement de ces boucles est destructif.

En outre, il est nécessaire de faire un traitement coûteux et long de ces lignes de gaz par dépôt d'alumine afin d'éviter les pollutions dues à l'oxydation lorsque de l'inox 316L est utilisé. Ces particules (chrome, vanadium, ...) peuvent venir se fixer sur cette cellule, et ainsi diminuer les performances de l'empilement à oxydes solides de type SOEC/SOFC.

Par ailleurs, la deuxième technique nécessite un surchauffeur 30 par entrées de gaz. Or, ce sont des ensembles massifs qui prennent beaucoup de place alors que l'on tend de plus en plus à aller vers des systèmes compacts. Il y a donc autant de surchauffeurs électriques que d'entrées de gaz, ce qui, dans le cadre de l'intégration des éléments périphériques dans un four, pose de sérieux problèmes. Il y a donc une nécessité de placer la sortie de gaz de ce chauffeur électrique 30 au plus proche des entrées du stack afin d'éviter un traçage de la ligne par bras chauffant.

### EXPOSÉ DE L'INVENTION

L'invention a pour but de remédier au moins partiellement aux besoins mentionnés précédemment et aux inconvénients relatifs aux réalisations de l'art antérieur.

Elle vise notamment la réalisation d'une conception particulière de système de surchauffe des gaz en entrée d'un empilement d'électrolyse à haute température (SOEC) ou de pile à combustible (SOFC), et plus spécifiquement à réaliser, en partie chaude, c'est-à-dire à l'intérieur de l'enceinte d'un four, et au droit des entrées et sorties des gaz, un système de surchauffe compacte, démontable et réutilisable, conférant alors un caractère de type « Plug & Play » (PnP), soit de type « branche et utilise », à l'empilement.

L'invention a ainsi pour objet, selon l'un de ses aspects, un empilement à oxydes solides de type SOEC/SOFC selon la revendication 1.

Grâce à l'invention, il est possible de s'affranchir des enroulements tubulaires compliqués à mettre en oeuvre, tels que décrits précédemment en lien avec la première technique de surchauffe des gaz, par le biais d'une géométrie innovante et compacte par rapport à près de 3,6 mètres de tubes cintrés dans l'enceinte du four par ligne de gaz. On obtient donc un gain significatif en termes d'encombrement.

De plus, le système de surchauffe de l'empilement selon l'invention pouvant faire partie du stack, il est possible d'éviter de refaire les enroulements tubulaires à chaque nouveau stack alors que le système de boucles tubulaires selon la première technique de l'art antérieur n'est pas récupérable.

En outre, il peut être aisé de mettre des thermocouples en sortie du système de surchauffe de l'empilement selon l'invention pour connaître avec exactitude la température d'entrée des gaz dans l'empilement ou stack, alors que pour les tubes selon l'art antérieur, c'est plus compliqué du fait du manque de place et des géométries courbes des enroulements.

Par ailleurs, le chemin du gaz au sein du système de surchauffe de l'empilement selon l'invention est facilité par la géométrie spiralée permettant une bonne continuité dans le flux de gaz entrant tout en limitant les pertes de charge.

De plus, l'éventuel traitement par dépôt d'alumine n'est à réaliser qu'une seule fois à l'intérieur du système de surchauffe pour éviter les pollutions par évaporation de chrome et d'autres éléments.

L'empilement selon l'invention peut en outre comporter l'une ou plusieurs des caractéristiques suivantes prises isolément ou suivant toutes combinaisons techniques possibles.

Avantageusement, le système de surchauffe est en entrée d'un empilement à oxydes solides de type SOEC/SOFC placé sur un four, le système de surchauffe étant positionné en partie chaude, c'est-à-dire à l'intérieur de l'enceinte du four.

De façon avantageuse, la communication fluidique entre les première et deuxième zones du corps principal n'est permise que par le biais du passage traversant du corps principal. En particulier, les conduits d'entrée et de sortie ne sont pas en communication fluidique l'un avec l'autre, de sorte que les gaz entrants du conduit d'entrée circulent nécessairement dans les premier et deuxième circuits de circulation des gaz avant de rejoindre le conduit de sortie d'où sortent les gaz sortants réchauffés.

Le système de surchauffe peut comporter une première plaque de fermeture et une deuxième plaque de fermeture, s'étendant de part et d'autre du corps principal pour respectivement recouvrir les première et deuxième zones du corps principal, le premier circuit de circulation des gaz étant alors situé entre le plan médian et la première plaque de fermeture et le deuxième circuit de circulation des gaz étant alors situé entre le plan médian et la deuxième plaque de fermeture.

Par ailleurs, les au moins un conduit d'entrée et un conduit de sortie peuvent s'étendre sensiblement perpendiculairement au plan médian du corps principal en superposition l'un par rapport à l'autre et peuvent être séparés l'un de l'autre par une paroi médiane transversale du corps principal dans laquelle est formé le passage traversant.

De plus, le corps principal peut avantageusement présenter une forme générale cylindrique, notamment de section circulaire, les premier et deuxième circuits de circulation des gaz s'étendant notamment chacun sous la forme d'une spirale circulaire.

Toutefois, le corps principal peut en variante présenter tout autre type de forme en section, par exemple une forme polygonale, par exemple une forme carrée ou rectangulaire. De même, la forme spiralée des premier et deuxième circuits de circulation des gaz n'est pas limitée à une forme circulaire. Elle peut par exemple correspondre à une spirale polygonale, par exemple une spirale carrée ou rectangulaire. Le terme « spirale » n'est donc pas limité à une forme de spirale circulaire. De façon générale, le terme « spirale » signifie que le circuit démarre depuis un point externe et s'étend vers un point interne par rotation successives à la manière d'une spirale autour de ce point interne et vers ce point interne.

Il est à noter toutefois qu'une géométrie de forme polygonale, et notamment de forme carrée ou rectangulaire, peut générer des turbulences qui certes permettent un meilleur échange thermique mais qui augmentent aussi les pertes de charges par les effets de paroi.

Il est à noter également que les formes générales du corps principal et des spirales des premier et deuxième circuits de circulation des gaz ne sont pas nécessairement identiques. Par exemple, le corps principal peut présenter une forme cylindrique de section polygonale et les circuits de circulation des gaz une forme de spirale circulaire.

En outre, le corps principal peut comporter une portion principale, comprenant les premier et deuxième circuits de circulation des gaz, et une portion latérale en saillie de la portion principale au niveau de laquelle les au moins un conduit d'entrée et un conduit de sortie sont connectés fluidiquement au corps principal.

Le corps principal peut par exemple être réalisé en superalliage à base de nickel, en particulier de type Inconel 600.

L'ensemble peut particulièrement comporter au moins deux corps chauffants disposés de part et d'autre du au moins un système de surchauffe des gaz.

Plus particulièrement encore, l'ensemble peut comporter au moins deux systèmes de surchauffe des gaz, au contact l'un de l'autre, et au moins deux corps chauffants prenant en sandwich les au moins deux systèmes de surchauffe des gaz.

En outre, au moins un corps chauffant, notamment tous les corps chauffants, peuvent présenter une forme générale sensiblement analogue à celle d'au moins un système de surchauffe des gaz, notamment tous les systèmes de surchauffe des gaz.

Par ailleurs, l'invention a également pour objet, selon un autre de ses aspects, un procédé de fabrication d'au moins un système de surchauffe des gaz en entrée d'un empilement à oxydes solides de type SOEC/SOFC tel que défini précédemment, caractérisé en ce qu'il comporte l'étape d'usinage du corps principal pour former le premier circuit de circulation des gaz et le deuxième circuit de circulation des gaz.

Le procédé peut de plus comporter l'étape consistant à rapporter, par un procédé de soudage au laser par transparence, une première plaque de fermeture et une deuxième plaque de fermeture de part et d'autre du corps principal pour respectivement recouvrir les première et deuxième zones du corps principal.

L'empilement à oxydes solides de type SOEC/SOFC et le procédé de fabrication selon l'invention peuvent comporter l'une quelconque des caractéristiques énoncées dans la description, prises isolément ou selon toutes combinaisons techniquement possibles avec d'autres caractéristiques.

### BRÈVE DESCRIPTION DES DESSINS

L'invention pourra être mieux comprise à la lecture de la description détaillée qui va suivre, d'un exemple de mise en oeuvre non limitatif de celle-ci, ainsi qu'à l'examen des figures, schématiques et partielles, du dessin annexé, sur lequel :
- la figure 1 est une vue schématique montrant le principe de fonctionnement d'un électrolyseur à oxydes solides à haute température (SOEC),
- la figure 2 est une vue schématique éclatée d'une partie d'un électrolyseur à oxydes solides à haute température (SOEC) comprenant des interconnecteurs selon l'art antérieur,
- la figure 3 illustre le principe de l'architecture d'un four sur lequel un empilement d'électrolyse à haute température (SOEC) ou de pile à combustible (SOFC) fonctionnant à haute température est placé,
- la figure 4 illustre le principe d'un chauffeur électrique de gaz selon l'art antérieur,
- la figure 5 représente, en perspective, un exemple de système de surchauffe des gaz d'un empilement à oxydes solides de type SOEC/SOFC conforme à l'invention,
- la figure 6 représente, selon une vue en coupe, le système de surchauffe de la figure 5,
- la figure 7 représente, en perspective, le système de surchauffe de la figure 5, sans la présence de plaques de fermeture, du côté de l'entrée des gaz,
- la figure 8 représente, en perspective, le système de surchauffe de la figure 5, sans la présence de plaques de fermeture, du côté de la sortie des gaz,
- la figure 9 illustre le trajet de soudage par transparence à suivre pour la fixation des plaques de fermeture au corps principal du système de surchauffe de la figure 5,
- la figure 10 représente, selon une vue en coupe, un exemple d'empilement à oxydes solides de type SOEC/SOFC comprenant des corps chauffants de part et d'autre d'une pluralité de systèmes de surchauffe tels que celui de la figure 5, et
- la figure 11 illustre, en perspective, un autre exemple d'empilement à oxydes solides de type SOEC/SOFC comprenant un corps chauffant au contact d'une pluralité de systèmes de surchauffe tels que celui de la figure 5 pour deux lignes de gaz.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ D'UN MODE DE RÉALISATION PARTICULIER

Les figures 1 à 4 ont déjà été décrites précédemment dans la partie relative à l'état de la technique antérieure et au contexte technique de l'invention. Il est précisé que, pour les figures 1 et 2, les symboles et les flèches d'alimentation de vapeur d'eau H₂O, de distribution et de récupération de dihydrogène H₂, d'oxygène O₂, d'air et du courant électrique, sont montrés à des fins de clarté et de précision, pour illustrer le fonctionnement des dispositifs représentés.

En outre, il faut noter que tous les constituants (anode/électrolyte/cathode) d'une cellule électrochimique donnée sont préférentiellement des céramiques. La température de fonctionnement d'un empilement de type SOEC/SOFC haute température est par ailleurs typiquement comprise entre 600 et 1000°C.

De plus, les termes éventuels « supérieur » et « inférieur » sont à comprendre ici selon le sens d'orientation normal d'un empilement de type SOEC/SOFC lorsque dans sa configuration d'utilisation.

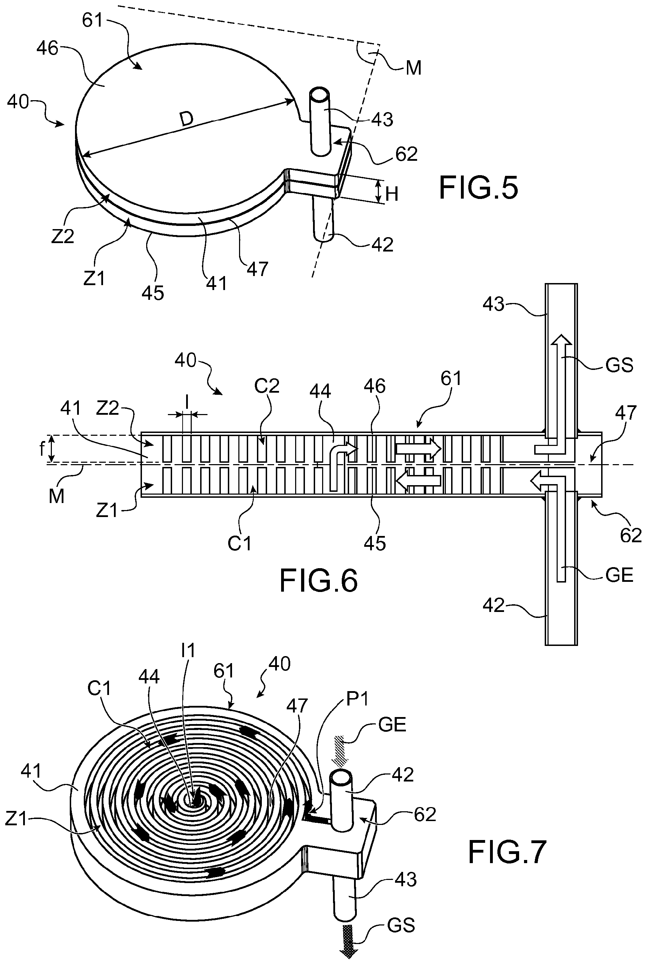

En référence aux figures 5 à 11, on a illustré un principe de réalisation d'un système de surchauffe 40 d'un empilement 20 conforme à l'invention. Ce système de surchauffe 40 permet de réaliser un chauffage des gaz en entrée d'un empilement 20 de type SOEC/SOFC associé à un four 10, comme décrit précédemment en référence à la figure 3.

Parmi les différents modes de transfert de chaleur dans la zone du four 10, le mode prépondérant à ces niveaux de température, soit entre 650 et 800°C, correspond à des échanges radiatifs par rayonnement. L'autre mode de transfert est alors la conduction thermique, et c'est celui que l'invention met en oeuvre car il a l'avantage de créer moins de pertes thermiques vers l'extérieur. Il s'agit du mode de transfert de chaleur provoqué par une différence de température entre deux régions d'un même milieu ou entre deux milieux en contact sans déplacement appréciable de matière. L'utilisation de plaques chauffantes, comme décrit par la suite, pour le système de surchauffe 40 permet de récupérer la conduction thermique et d'élever les gaz à la bonne température.

Comme visible sur les figures 1 à 8, le système de surchauffe 40 des gaz GS en entrée de l'empilement 20 à oxydes solides de type SOEC/SOFC comporte tout d'abord un corps principal 41 sous la forme d'un bloc central 41.

Ce bloc central 41 forme un système compact qui se présente ici sous une forme cylindrique de section circulaire, avec un diamètre D d'environ 140 mm et une hauteur H d'environ 22 mm, comme visibles sur la figure 5.

Ce bloc central 41 est par exemple réalisé en superalliage à base de nickel, en particulier de type Inconel 600.

Comme visible sur la figure 6, le bloc central 41 comporte une première zone Z1, dite zone inférieure, d'entrée des gaz à réchauffer GE et une deuxième zone Z2, dite zone supérieure, de sortie des gaz réchauffés GS.

Ces zones inférieure Z1 et supérieure Z2 sont séparées par un plan médian transversal M du bloc central 41.

Par ailleurs, le système de surchauffe 40 comporte également un conduit d'entrée 42 des gaz à réchauffer GE communiquant avec la zone inférieure Z1 du bloc central 41, et un conduit de sortie 43 des gaz réchauffés GS communiquant avec la zone supérieure Z2 du bloc central 41.

Comme tout particulièrement visible sur la figure 6, ces première Z1 et deuxième Z2 zones comportent respectivement un premier circuit de circulation des gaz C1 et un deuxième circuit de circulation des gaz C2.

De façon avantageuse, chaque circuit de circulation des gaz C1, C2 s'étend sous la forme d'une spirale, ici circulaire, respectivement depuis une première extrémité externe P1 vers une première extrémité interne I1, et depuis une deuxième extrémité externe P2 vers une deuxième extrémité interne I2.

Ces première I1 et deuxième I2 extrémités internes communiquent entre elles par le biais d'un passage traversant 44 du bloc central 41, qui est formé au travers du plan médian M pour la mise en communication fluidique des première Z1 et deuxième Z2 zones.

Par ailleurs, comme visible toujours sur la figure 6, les conduits d'entrée 42 et de sortie 43 sont respectivement en communication fluidique avec les première P1 et deuxième P2 extrémités externes.

De cette façon, comme illustré par le cheminement des flèches sur les figures 6, 7 et 8, un flux de gaz à réchauffer GE entrant dans le conduit d'entrée 42 circule dans le premier circuit de circulation des gaz C1, depuis la première extrémité externe P1 vers la première extrémité interne I1, et traverse le passage traversant 44 pour ensuite circuler dans le deuxième circuit de circulation des gaz C2, depuis la deuxième extrémité interne I2 vers la deuxième extrémité externe P2, et ensuite dans le conduit de sortie 43 des gaz réchauffés GS pour atteindre enfin l'entrée de l'empilement 20 à oxydes solides de type SOEC/SOFC.

Par ailleurs, comme visible sur les figures 5 et 6, le système de surchauffe 40 comporte deux tôles de fermeture 45 et 46, s'étendant de part et d'autre du bloc central 41. Plus précisément, le premier circuit de circulation des gaz C1 est situé entre le plan médian M et la tôle de fermeture 45 et le deuxième circuit de circulation des gaz C2 est situé entre le plan médian M et la tôle de fermeture 46.

En outre, les premier C1 et deuxième C2 circuits de circulation des gaz sont formés par usinage, par exemple par le biais d'une fraiseuse à commande numérique ou de tout autre système d'usinage approprié afin d'obtenir une spirale. Cet usinage est réalisé suivant une spirale convergeant vers le centre du bloc central 41 au niveau du passage traversant 44.

La profondeur f de l'usinage, représentée sur la figure 6, est par exemple d'environ 10 mm, tandis que la largeur l de l'usinage, représentée sur la figure 6 également, est par exemple d'environ 3 mm. Avantageusement, la section de l'usinage équivaut à la section couverte par le diamètre interne d'un tube en inconel 600 de diamètre 10/12. De façon générale, la section de la spirale formée correspond préférentiellement à la quantité de gaz souhaitée pour l'alimentation de l'empilement 20.

Par ailleurs, comme visible sur les figures 5 à 8, il est à noter que les conduits d'entrée 42 et de sortie 43 s'étendent perpendiculairement au plan médian M en superposition l'un par rapport à l'autre et sont séparés l'un de l'autre par une paroi médiane transversale 47 du bloc central 41 dans laquelle est formé le passage traversant 44.

En outre, le bloc central 41 comporte une portion principale 61, comprenant les premier C1 et deuxième C2 circuits de circulation des gaz, et une portion latérale 62 en saillie de la portion principale 62 au niveau de laquelle les conduits d'entrée 42 et de sortie 43 sont connectés fluidiquement au bloc central 41.

Les gaz entrants GE, en provenance d'échangeurs thermiques, pénètrent dans la première spirale du premier circuit C1 et convergent vers le centre du bloc central 41 jusqu'au passage traversant 44 sur une longueur totale d'environ 1,8 m. De là, les gaz franchissent le plan médian M par le biais du passage traversant 44 et suivent un chemin inverse dans la deuxième spirale du deuxième circuit C2 pour parcourir une longueur totale d'environ 1, 8 m également.

Les tôles de fermeture 45 et 46 sont préférentiellement rapportées soudées laser par transparence. La technique du soudage au laser permet le soudage de métaux par les caractéristiques de la technologie laser : avec la haute densité d'énergie et de finesse du faisceau laser, les zones ciblées entrent en fusion puis sont rapidement soudées par refroidissement. Il en résulte une soudure solide sur une surface réduite.

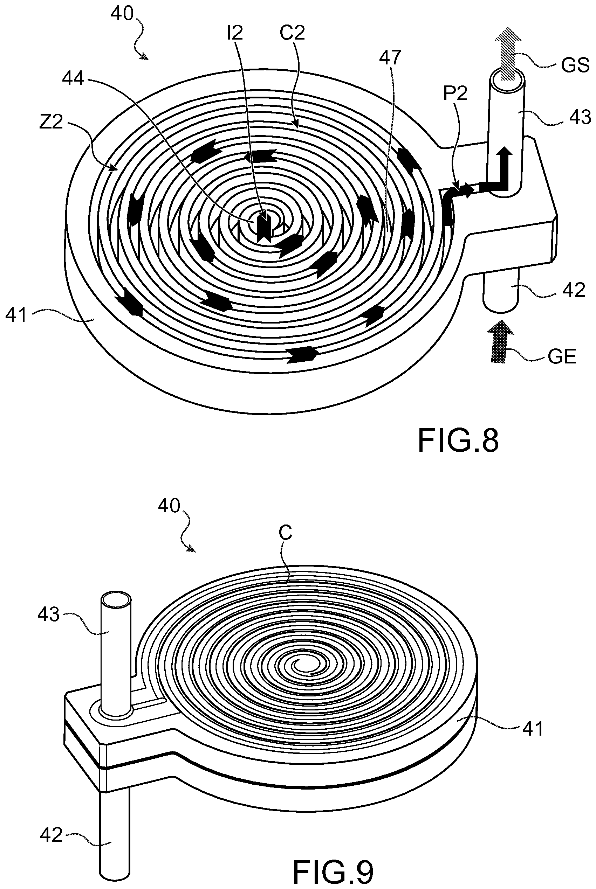

Comme illustré sur la figure 9, la soudure laser par transparence doit préférentiellement suivre le contour C tel que représenté pour pouvoir forcer les gaz à suivre le chemin complet.

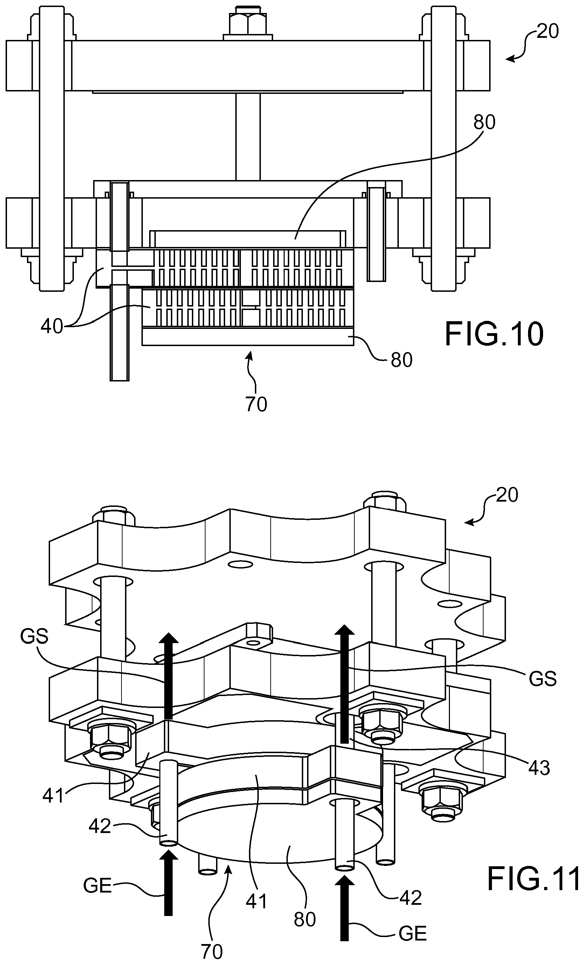

Par ailleurs, il est possible de doubler le système de surchauffe 40 précédemment décrit pour une pluralité de lignes de gaz. Ainsi, les figures 10 et 11 illustrent des exemples d'empilements 20 à oxydes solides de type SOEC/SOFC comprenant un ensemble 70 de deux systèmes de surchauffe 40 des gaz GS en entrée de l'empilement 20 associés à des corps chauffants 80 sous forme de plaques chauffantes 80.

Plus précisément, sur la figure 10, deux plaques chauffantes 80 sont situées de part et d'autre de deux systèmes de surchauffe 40 de telle sorte qu'ils soient pris en sandwich par les plaques chauffantes 80. Ces plaques chauffantes 80, au contact des systèmes de surchauffe 40, permettent le réchauffement des gaz par convection thermique avant leur entrée dans l'empilement 20.

Sur la figure 11, l'ensemble 70 comporte une plaque chauffante 80 de forme similaire à celle du bloc central 41.

Bien entendu, l'invention n'est pas limitée à l'exemple de réalisation qui vient d'être décrit. Diverses modifications peuvent y être apportées par l'homme du métier dans le cadre défini par les revendications.

## Revendications

1. Empilement (20) à oxydes solides de type SOEC/SOFC, **caractérisé en ce qu'**il comporte un ensemble (70) comportant :
- au moins un système de surchauffe (40) des gaz (GS) en entrée de l'empilement (20) à oxydes solides de type SOEC/SOFC, comportant :
- un corps principal (41) comprenant une première zone (Z1), dite zone inférieure, d'entrée des gaz à réchauffer (GE) et une deuxième zone (Z2), dite zone supérieure, de sortie des gaz réchauffés (GS), les première (Z1) et deuxième (Z2) zones étant séparées par un plan médian transversal (M) du corps principal (41),
- au moins un conduit d'entrée (42) des gaz à réchauffer (GE) communiquant avec la première zone (Z1) du corps principal (41),
- au moins un conduit de sortie (43) des gaz réchauffés (GS) communiquant avec la deuxième zone (Z2) du corps principal (41),
les première (Z1) et deuxième (Z2) zones du corps principal (41) comportant respectivement un premier circuit de circulation des gaz (C1) et un deuxième circuit de circulation des gaz (C2), le premier circuit de circulation des gaz (C1), respectivement le deuxième circuit de circulation des gaz (C2), s'étendant sous la forme d'une spirale depuis une première extrémité externe (P1) vers une première extrémité interne (I1), respectivement depuis une deuxième extrémité externe (P2) vers une deuxième extrémité interne (I2),
les première (l1) et deuxième (l2) extrémités internes communiquant entre elles par le biais d'un passage traversant (44) du corps principal (41), formé au travers du plan médian (M) du corps principal (41) pour la mise en communication fluidique des première (Z1) et deuxième (Z2) zones,
les au moins un conduit d'entrée (42) et un conduit de sortie (43) étant respectivement en communication fluidique avec les première (P1) et deuxième (P2) extrémités externes de sorte qu'un flux de gaz à réchauffer (GE) entrant dans le au moins un conduit d'entrée (42) circule dans le premier circuit de circulation des gaz (C1), depuis la première extrémité externe (P1) vers la première extrémité interne (l1), et traverse le passage traversant (44) pour ensuite circuler dans le deuxième circuit de circulation des gaz (C2), depuis la deuxième extrémité interne (I2) vers la deuxième extrémité externe (P2), et ensuite dans le au moins un conduit de sortie (43) des gaz réchauffés (GS) pour atteindre l'entrée de l'empilement (20) à oxydes solides de type SOEC/SOFC,
- au moins un corps chauffant (80) placé au contact dudit au moins un système de surchauffe (40) des gaz (GS).

2. Empilement selon la revendication 1, **caractérisé en ce que** le système de surchauffe (40) comporte une première plaque de fermeture (45) et une deuxième plaque de fermeture (46), s'étendant de part et d'autre du corps principal (41) pour respectivement recouvrir les première (Z1) et deuxième (Z2) zones du corps principal (41), le premier circuit de circulation des gaz (C1) étant alors situé entre le plan médian (M) et la première plaque de fermeture (45) et le deuxième circuit de circulation des gaz (C2) étant alors situé entre le plan médian (M) et la deuxième plaque de fermeture (46).

3. Empilement selon la revendication 1 ou 2, **caractérisé en ce que** les au moins un conduit d'entrée (42) et un conduit de sortie (43) s'étendent sensiblement perpendiculairement au plan médian (M) du corps principal (41) en superposition l'un par rapport à l'autre et étant séparés l'un de l'autre par une paroi médiane transversale (47) du corps principal (41) dans laquelle est formé le passage traversant (44).

4. Empilement selon l'une des revendications précédentes, **caractérisé en ce que** le corps principal (41) présente une forme générale cylindrique, notamment de section circulaire, les premier (C1) et deuxième (C2) circuits de circulation des gaz s'étendant notamment chacun sous la forme d'une spirale circulaire.

5. Empilement selon l'une quelconque des revendications précédentes, **caractérisé en ce que** le corps principal (41) comporte une portion principale (61), comprenant les premier (C1) et deuxième (C2) circuits de circulation des gaz, et une portion latérale (62) en saillie de la portion principale (62) au niveau de laquelle les au moins un conduit d'entrée (42) et un conduit de sortie (43) sont connectés fluidiquement au corps principal (41).

6. Empilement selon l'une quelconque des revendications précédentes, **caractérisé en ce que** le corps principal (41) est réalisé en superalliage à base de nickel, en particulier de type Inconel 600.

7. Empilement selon l'une quelconque des revendications précédentes, **caractérisé en ce que** l'ensemble (70) comporte au moins deux corps chauffants (80) disposés de part et d'autre du au moins un système de surchauffe (40) des gaz (GS).

8. Empilement selon l'une quelconque des revendications précédentes, **caractérisé en ce que** l'ensemble (70) comporte au moins deux systèmes de surchauffe (40) des gaz (GS), au contact l'un de l'autre, et au moins deux corps chauffants (80) prenant en sandwich les au moins deux systèmes de surchauffe (40) des gaz (GS).

9. Empilement selon l'une quelconque des revendications précédentes, **caractérisé en ce qu'**au moins un corps chauffant (80) présente une forme générale sensiblement analogue à celle d'au moins un système de surchauffe (40) des gaz (GS).

10. Procédé de fabrication d'au moins un système de surchauffe (40) des gaz (GS) en entrée de l'empilement (20) à oxydes solides de type SOEC/SOFC selon l'une quelconque des revendications précédentes, **caractérisé en ce qu'**il comporte l'étape d'usinage du corps principal (41) pour former le premier circuit de circulation des gaz (C1) et le deuxième circuit de circulation des gaz (C2).

11. Procédé selon la revendication 10, **caractérisé en ce qu'**il comporte l'étape consistant à rapporter, par un procédé de soudage au laser par transparence, une première plaque de fermeture (45) et une deuxième plaque de fermeture (46) de part et d'autre du corps principal (41) pour respectivement recouvrir les première (Z1) et deuxième (Z2) zones du corps principal (41).

## Patentansprüche

1. Festoxidstapel (20) in der Art SOEC/SOFC, **dadurch gekennzeichnet, dass** er eine Einheit (70) beinhaltet, welche Folgendes beinhaltet:
- mindestens ein Überhitzungssystem (40) der Gase (GS) am Eingang des Festoxidstapels (20) in der Art SOEC/SOFC, welches Folgendes beinhaltet:
- einen Hauptkörper (41), der eine erste Zone (Z1), untere Zone genannt, als Eingang der zu erhitzenden Gase (GE) und eine zweite Zone (Z2), obere Zone genannt, als Ausgang der erhitzten Gase (GS) umfasst, wobei die erste (Z1) und zweite (Z2) Zone durch eine querlaufende Mittelebene (M) des Hauptkörpers (41) getrennt sind,
- mindestens eine Eingangsleitung (42) der zu erhitzenden Gase (GE), die mit der ersten Zone (Z1) des Hauptkörpers (41) kommuniziert,
- mindestens eine Ausgangsleitung (43) der erhitzten Gase (GS), die mit der zweiten Zone (Z2) des Hauptkörpers (41) kommuniziert,
wobei die erste (Z1) und zweite (Z2) Zone des Hauptkörpers (41) jeweils einen ersten Gaszirkulationskreis (C1) und einen zweiten Gaszirkulationskreis (C2) beinhalten, wobei sich der erste Gaszirkulationskreis (C1) beziehungsweise der zweite Gaszirkulationskreis (C2) in der Form einer Spirale aus einem ersten äußeren Ende (P1) zu einem ersten inneren Ende (l1), beziehungsweise aus einem zweiten äußeren Ende (P2) zu einem zweiten inneren Ende (l2) erstrecken,
das erste (l1) und zweite (l2) innere Ende miteinander über einen querenden Durchlass (44) des Hauptkörpers (41) miteinander kommunizieren, der quer durch die Mittelebene (M) des Hauptkörpers (41) hindurch zur Fluidkommunikation der ersten (Z1) und zweiten (Z2) Zone gebildet ist,
wobei die mindestens eine Eingangsleitung (42) und eine Ausgangsleitung (43) jeweils in Fluidkommunikation mit dem ersten (P1) und zweiten (P2) äußeren Enden sind, sodass ein zu erhitzender Gasstrom (GE), der in die mindestens eine Eingangsleitung (42) eintritt, in dem ersten Gaszirkulationskreis (C1) vom ersten äußeren Ende (P1) zum ersten inneren Ende (l1) zirkuliert, und den querenden Durchlass (44) durchquert, um danach in dem zweiten Gaszirkulationskreis (C2) von dem zweiten inneren Ende (l2) zum zweiten äußeren Ende (P2), und danach in der mindestens einen Ausgangsleitung (43) der erhitzten Gase (GS) zu zirkulieren, um den Eingang des Festoxidstapels (20) in der Art SOEC/SOFC zu erreichen,
- mindestens einen Heizkörper (80), der in Kontakt mit dem mindestens einen Überhitzungssystem (40) der Gase (GS) platziert ist.

2. Stapel nach Anspruch 1, **dadurch gekennzeichnet, dass** das Überhitzungssystem (40) eine erste Verschlussplatte (45) und eine zweite Verschlussplatte (46) beinhaltet, die sich beiderseits des Hauptkörpers (41) erstrecken um jeweils die erste (Z1) und zweite Zone (Z2) des Hauptkörpers (41) abzudecken, wobei sich der erste Gaszirkulationskreis (C1) somit zwischen der Mittelebene (M) und der ersten Verschlussplatte (45) befindet, und sich der zweite Gaszirkulationskreis (C2) somit zwischen der Mittelebene (M) und der zweiten Verschlussplatte (46) befindet.

3. Stapel nach Anspruch 1 oder 2, **dadurch gekennzeichnet, dass** sich die mindestens eine Eingangsleitung (42) und eine Ausgangsleitung (43) im Wesentlichen senkrecht zur Mittelebene (M) des Hauptkörpers (41) in Überlagerung zueinander erstrecken und durch eine querlaufende Mittelwand (47) des Hauptkörpers (41) voneinander getrennt sind, in der der querende Durchlass (44) gebildet ist.

4. Stapel nach einem der vorstehenden Ansprüche, **dadurch gekennzeichnet, dass** der Hauptkörper (41) eine allgemeine zylindrische Form, insbesondere mit kreisförmigem Querschnitt aufweist, wobei sich der erste (C1) und zweite (C2) Gaszirkulationskreis jeweils insbesondere in der Form einer kreisförmigen Spirale erstrecken.

5. Stapel nach einem der vorstehenden Ansprüche, **dadurch gekennzeichnet, dass** der Hauptkörper (41) einen Hauptabschnitt (61) beinhaltet, der den ersten (C1) und zweiten (C2) Gaszirkulationskreis umfasst, und einen Seitenabschnitt (62), der aus dem Hauptabschnitt (62) hervorsteht, im Bereich dessen die mindestens eine Eingangsleitung (42) und eine Ausgangsleitung (43) fluidisch mit dem Hauptkörper (41) verbunden sind.

6. Stapel nach einem der vorstehenden Ansprüche, **dadurch gekennzeichnet, dass** der Hauptkörper (41) aus einer Superlegierung auf Basis von Nickel, insbesondere in der Art Inconel 600 gefertigt ist.

7. Stapel nach einem der vorstehenden Ansprüche, **dadurch gekennzeichnet, dass** die Einheit (70) mindestens zwei Heizkörper (80) beinhaltet, die beiderseits des mindestens einen Überhitzungssystems (40) der Gase (GS) angeordnet sind.

8. Stapel nach einem der vorstehenden Ansprüche, **dadurch gekennzeichnet, dass** die Einheit (70) mindestens zwei Überhitzungssysteme (40) der Gase (GS) in Kontakt miteinander, und mindestens zwei Heizkörper (80) beinhaltet, die die mindestens zwei Überhitzungssysteme (40) der Gase (GS) in der Art eines Sandwiches einschließen.

9. Stapel nach einem der vorstehenden Ansprüche, **dadurch gekennzeichnet, dass** mindestens ein Heizkörper (80) eine allgemeine Form im Wesentlichen analog jener mindestens eines Überhitzungssystems (40) der Gase (GS) aufweist.

10. Verfahren zur Herstellung mindestens eines Überhitzungssystems (40) der Gase (GS) am Eingang des Festoxidstapels (20) in der Art SOEC/SOFC nach einem der vorstehenden Ansprüche, **dadurch gekennzeichnet, dass** es den Bearbeitungsschritt des Hauptkörpers (41) beinhaltet, um den ersten Gaszirkulationskreis (C1) und den zweiten Gaszirkulationskreis (C2) zu bilden.

11. Verfahren nach Anspruch 10, **dadurch gekennzeichnet, dass** es den Schritt beinhaltet, der darin besteht, durch ein Transparenz-Laserschweißverfahren eine erste Verschlussplatte (45) und eine zweite Verschlussplatte (46) beiderseits des Hauptkörpers (41) beizubringen, um jeweils die erste (Z1) und zweite Zone (Z2) des Hauptkörpers (41) abzudecken.

## Claims

1. SOEC/SOFC stack (20), **characterized in that** it comprises an assembly (70) comprising:
- at least one SOEC/SOFC stack (20) gas (GS) superheat system (40); and
- a main body (41) comprising a first zone (Z1), called the lower zone, for the inlet of the gases to be heated (IG) and a second zone (Z2), called the upper zone, for the outlet of the heated gases (GS), the first (Z1) and second (Z2) zones being separated by a transverse median plane (M) of the main body (41),
- at least one inlet duct (42) for gases to be heated (GE) communicating with the first zone (Z1) of the main body (41),
- at least one outlet duct (43) for heated gas (GS) communicating with the second zone (Z2) of the main body (41),
the first (Z1) and second (Z2) zones of the main body (41) comprising respectively a first gas circulation circuit (C1) and a second gas circulation circuit (C2), the first gas circulation circuit (C1), respectively the second gas circulation circuit (C2), extending in the form of a spiral from a first outer end (P1) to a first inner end (l1), respectively from a second outer end (P2) to a second inner end (I2), the first (l1) and second (l2) inner ends communicating with each other through a through-passage (44) of the main body (41), formed through the median plane (M) of the main body (41) for fluid communication of the first (Z1) and second (Z2) zones,
the at least one inlet duct (42) and one outlet duct (43) being in fluid communication with the first (P1) and second (P2) outer ends, respectively, so that a flow of gas to be heated (GE) entering the at least one inlet duct (42) flows into the first gas circulation circuit (C1) from the first outer end (P1) to the first inner end (l1), and passes through the through-passage (44) and then flows into the second gas circulation circuit (C2), from the second inner end (l2) to the second outer end (P2), and then into the at least one heated gas (GS) outlet duct (43) to reach the inlet of the SOEC/SOFC stack (20).
- at least one heating element (80) placed in contact with said at least one SOEC/SOFC stack (20) gas (OG) superheat system (40);

2. Stack according to claim 1, **characterized in that** the superheat system (40) comprises a first closure plate (45) and a second closure plate (46), extending on either side of the main body (41) to respectively cover the first (Z1) and second (Z2) zones of the main body (41) for respectively the first gas circulation circuit (C1) being then located between the median plane (M) and the first closure plate (45) and the second gas circulation circuit (C2) being then located between the median plane (M) and the second closure plate (46).

3. Stack according to claim 1 or 2, **characterized in that** the at least one inlet duct (42) and the at least one outlet duct (43) extend substantially perpendicular to the median plane (M) of the main body (41) in superposition with respect to each other and are separated from each other by a transverse median wall (47) of the main body (41) in which the through-passage (44) is formed.

4. Stack according to one of the preceding claims, **characterized in that** the main body (41) has a cylindrical shape of circular cross-section, the first (C1) and second (C2) gas circulation circuits each extending in the form of a circular spiral.

5. Stack according to any one of the preceding claims, **characterized in that** the main body (41) has a main portion (61), comprising the first (C1) and second (C2) gas circulation circuits, and a lateral portion (62) projecting from the main portion (61) at which the at least one inlet duct (42) and one outlet duct (43) are fluidly connected to the main body (41).

6. Stack according to any one of the preceding claims, **characterized in that** the main body (41) is made of nickel-based superalloy, in particular of the Inconel 600 type.

7. Stack according to any one of the preceding claims, **characterized in that** the assembly (70) comprises at least two heating elements (80) arranged on either side of the at least one gas (GS) superheat system (40).

8. Stack according to any one of the preceding claims, **characterized in that** the assembly (70) comprises at least two gas (GS) superheat systems (40) in contact with each other and at least two heating elements (80) sandwiching the at least two gas (GS) superheat systems(40).

9. Stack according to any one of the preceding claims, **characterized in that** at least one heating element (80) has a shape similar to a shape of at least one gas (GS) superheat system (40).

10. Process for manufacturing at least one SOEC/SOFC stack (20) inlet gas (GS) superheat system (40) according to any one of the preceding claims, **characterized in that** it comprises the step of machining the main body (41) to form the first gas circulation circuit (C1) and the second gas circulation circuit (C2).

11. Process according to claim 10, **characterized in that** it comprises the step of attaching, by a laser transmission welding process, a first closure plate (45) and a second closure plate (46) on either side of the main body (41) to cover the first (Z1) and second (Z2) zones of the main body (41), respectively.
